# EUROPEAN PATENT APPLICATION

(11) **EP 2 023 467 A1**
(43) Date of publication of application: **11.02.2009**
(21) Application number: 07741844.0
(22) Date of filing: 18.04.2007
(51) Int. Cl.: H02K 7/116

(54) **MOTOR WITH REDUCTION GEAR AND METHOD OF MANUFACTURING THE SAME**

(30) Priority: 17.05.2006 JP 2006137320
(71) Applicant: Mabuchi Motor Co., Ltd., Matsudo-shi, Chiba 270-2280 (JP)
(72) Inventor: SAYA, Tsutomu, Matsudo-shi, Chiba 270-2280 (JP); OJIMA, Masatoshi, Matsudo-shi, Chiba 270-2280 (JP)
(74) Representative: Reichel, Wolfgang
(86) International application number: PCT/JP2007/058408
(87) International publication number: WO 2007/132624

(57) **Abstract**

A motor equipped with a reducer includes a motor section, and a reducer section assembled to the motor section. The motor section has a first bearing provided at the center of a bottom portion of a closed-bottomed tubular casing, a second bearing provided at the center of an end bell fitted to an opening portion of the casing, and a rotating shaft which is supported by the first bearing and the second bearing and extends outward from the motor section in such a manner that a distal end of the rotating shaft is rotatably supported by a third bearing provided within the reducer section. The motor equipped with a reducer further includes a fourth bearing adapted to support the rotating shaft and provided within the reducer section, and a bearing holder for fixedly holding the fourth bearing between the bearing holder and a stopper portion provided on the gear box.

## Description

### TECHNICAL FIELD

The present invention relates to a motor equipped with a reducer which can be utilized for opening and closing, for example, window glass of an automobile, as well as to a method of manufacturing the same.

### BACKGROUND ART

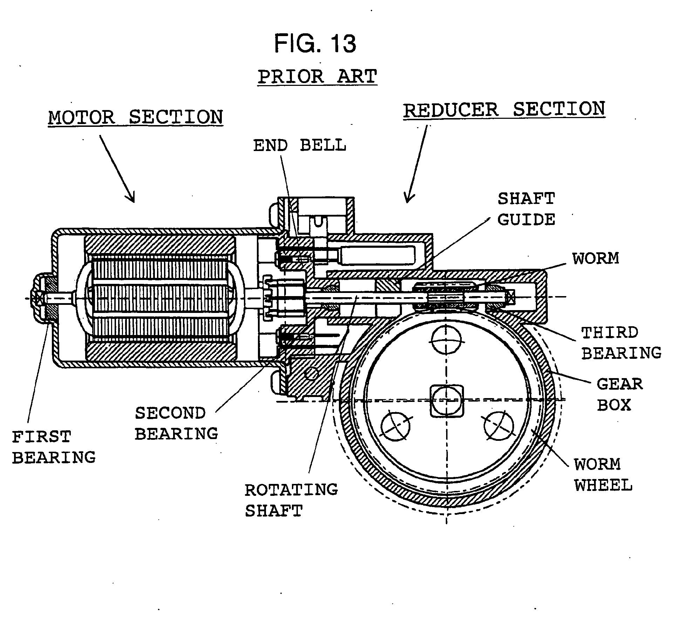

FIG. 13 is a vertical sectional view of a conventional motor equipped with a reducer (refer to Patent Document 1). The motor equipped with a reducer is an assembly of a motor section and a reducer section. The reducer section is configured such that a gear box houses a worm mounted on a rotating shaft, a worm wheel meshed with the worm, and the like.

In order to support rotating members of the motor section, three bearings are required. The three bearings are a first bearing and a second bearing provided on a motor side, and a third bearing provided on a gear-box side. Particularly, the second bearing, which is a central bearing, is housed in an end bell of the motor section. The end bell is held between the motor section and the reducer section.

However, in an application requiring higher output and higher torque than in a conventional practice, such a configuration has a limit to the capability of restraining deformation of the rotating shaft when the second bearing is not firmly held in the end bell of the motor section and/or when the rotating shaft is thin. In such a case, when the rotating shaft receives from the worm a thrust force toward the motor casing, the rotating shaft deflects in such a direction as to be parted from the worm wheel. As a result, meshing between the worm and the worm wheel becomes shallow, potentially causing breakage of teeth of the worm wheel.

Thus, the illustrated configuration has a shaft guide located on the rotating shaft and between the worm and the second bearing. The shaft guide has an opening portion which opens downward, and a predetermined axial length, so as to receive the rotating shaft from above. However, since the shaft guide has the opening portion which opens toward the worm wheel, the following problem arises. When the shaft of a rotor bends, at a certain rotational position, the rotating shaft is deflected toward the opening portion. Accordingly, the rotating shaft comes into contact with the shaft guide at a certain rotational position and separates from the shaft guide at other rotational positions, so that the noise is generated from the rotating shaft beating the shaft guide.

Also, there is devised a configuration in which a bearing provided on a central position of a rotating shaft is supported in a gear box (refer to Patent Document 2). According to the conventional device, as a preliminary assembly, a ball metal, which serves as the bearing, must be fitted to the rotating shaft, and also a worm must be press-fitted to the rotating shaft. Therefore, a motor section cannot be used alone as a miniature motor. Also, motor sections alone cannot be inventory-managed.

According to another technique (refer to Patent Document 3), in place of a single long shaft, a tandem shaft is used; specifically, a shaft of a motor and another shaft are connected together through a coupling, and a worm is mounted on the tandem shaft. It is not easy to provide two bearings within a reducer section having a hollow structure, for supporting a rotating shaft on which a worm is fixed. However, use of such a tandem shaft facilitates provision of two bearings in the reducer section. However, use of such a tandem shaft apparently results in a complex structure and deteriorates coaxiality.
Patent Document 1: Japanese Patent Application Laid-Open (*kokai*) No. H10-285870
Patent Document 2: Japanese Utility Model Application Laid-Open (*kokai*) No. H4-5549
Patent Document 3: Japanese Utility Model Application Laid-Open (*kokai*) No. H5-61544

### DISCLOSURE OF THE INVENTION

### PROBLEMS TO BE SOLVED BY THE INVENTION

An object of the present invention is to solve the above-mentioned problems, and to provide a motor equipped with a reducer in which a configuration capable of restraining deformation of a rotating shaft improves particularly meshing accuracy of gears and thus enables use in applications requiring high output and high torque, and also enables employment of a single, thin rotating shaft.

### MEANS FOR SOLVING THE PROBLEMS

A motor equipped with a reducer of the present invention comprises a motor section, and a reducer section assembled to the motor section. The motor section has a first bearing provided at the center of a bottom portion of a closed-bottomed tubular casing, a second bearing provided at the center of an end bell fitted to an opening portion of the casing, and a rotating shaft which is supported by the first bearing and the second bearing and extends outward from the motor section in such a manner that a distal end of an outward extending portion of the rotating shaft is rotatably supported by a third bearing provided within the reducer section. The reducer section has a gear box, a worm mounted on the outward extending portion of the rotating shaft which is housed in the gear box, a worm wheel meshed with the worm, and an output shaft positioned at the center of the worm wheel and rotatable with the worm wheel. The motor equipped with a reducer further comprises a fourth bearing adapted to support the rotating shaft and provided within the reducer section, and a bearing holder for fixedly holding the fourth bearing between the bearing holder and a stopper portion provided on the gear box.

The fourth bearing is provided between the worm and the second bearing provided at the center of the end bell, and the bearing holder is fixed to an end face of the end bell. The stopper portion provided on the gear box is a step or a projection formed integrally with the gear box made of resin. The bearing holder is formed of resin and has an integrally formed claw portion for supporting the fourth bearing by means of a distal end of the claw portion, and an integrally formed engagement portion to be inserted into a corresponding hole formed in the end bell for engagement with the end bell. An engagement groove is formed in the gear box for allowing the claw portion of the bearing holder to be fitted into the engagement groove so as to circumferentially position the motor section and the reducer section and prevent radially outward movement of the claw portion, thereby supporting the fourth bearing in an axial direction of the rotating shaft by means of a distal end of the claw portion. Further, in an open space located between the end bell and a claw portion of the bearing holder, a sensor magnet for measuring rotation of the motor is fixed on the rotating shaft, and a mounting plate on which a Hall IC is mounted is fixed between the fourth bearing and the sensor magnet such that the Hall IC faces the sensor magnet.

The bearing holder is formed of resin and has an integrally formed claw portion for supporting the fourth bearing by means of a distal end of the claw portion, and an integrally formed engagement portion to be fitted into a corresponding recess formed in the end bell for engagement with the end bell. A pair of conductive terminals are assembled into the bearing holder. The pair of conductive terminals include a pair of input connection portions which come into contact with a pair of input terminals projecting from the end bell for connection with the pair of input terminals, a pair of external terminals which are electrically connected to a circuit externally of the motor, and a conductive material for establishing electric wiring between the input connection portions and the external terminals.

A method of manufacturing a motor equipped with a reducer of the present invention comprises the following steps. After a fourth bearing is assembled onto the outward extending portion of the rotating shaft extending from the assembled motor section, a portion of the rotating shaft is knurled. The worm is press-fitted onto the knurled portion. A bearing holder is fixedly assembled to an end face of the end bell. The outward extending portion of the rotating shaft is inserted into an insertion portion of the gear box until the fourth bearing comes into contact with a stopper portion provided on the gear box. By this procedure, the fourth bearing is fixedly held between the bearing holder and the stopper portion provided on the gear box. Alternatively, after the fourth bearing and the worm are fitted onto the rotating shaft, a portion of the rotating shaft located toward the distal end of the rotation shaft can be knurled, and the worm can be drawn toward the distal end of the rotating shaft so as to be press-fitted onto the knurled portion.

### EFFECT OF THE INVENTION

The present invention employs a configuration capable of restraining deformation of the rotating shaft. The configuration improves particularly meshing accuracy of gears, and also enables employment of a single, thin rotating shaft. Even when a motor equipped with a reducer is reduced in size and weight through employment of a thin rotating shaft, sufficient breakage strength of the worm wheel can be obtained.

Further, since the fourth bearing reliably supports the rotating shaft along the entire circumference of the rotating shaft, the noise which could otherwise result from the rotating shaft beating the fourth bearing is not generated.

Also, since the fourth bearing is fixedly held between the gear box and the claw portion of the bearing holder, entry of grease into the motor section from the reducer section can be prevented, thereby preventing adhesion of grease to the mounting plate on which the Hall IC is mounted, and to other components.

### BRIEF DESCRIPTION OF THE DRAWINGS

FIG. 1 is a vertical sectional view of a motor equipped with a reducer configured on the basis of the present invention.
FIG. 2 is a sectional view of the motor equipped with a reducer of FIG. 1 as viewed from above, showing a fourth bearing, which is a feature of the present invention, and its peripheral configuration.
FIG. 3 is a series of views showing a bearing sleeve adapted to support the fourth bearing, wherein (A) to (F) are views of the bearing sleeve as viewed from different directions.
FIG. 4 is a series of views for explaining how to fix the fourth bearing and a worm on a rotating shaft.
FIG. 5 is a view for explaining how a sensor magnet and a Hall IC are mounted.
FIG. 6 is a view showing a gear box to be fixedly joined to a motor section.
FIG. 7 is a pair of views for explaining a terminal holder in detail.
FIG. 8 is a pair of views showing an end bell.
FIG. 9 is a pair of views showing a state in which the terminal holder is assembled to the end bell.
FIG. 10 is a series of views for explaining another example assembly of the terminal holder to the end bell.
FIG. 11 is a view showing the terminal holder to which a printed wiring board is assembled.
FIG. 12 is a view showing a composite bearing which is used as the fourth bearing.
FIG. 13 is a vertical sectional view of a conventional motor equipped with a reducer.

### BEST MODE FOR CARRYING OUT THE INVENTION

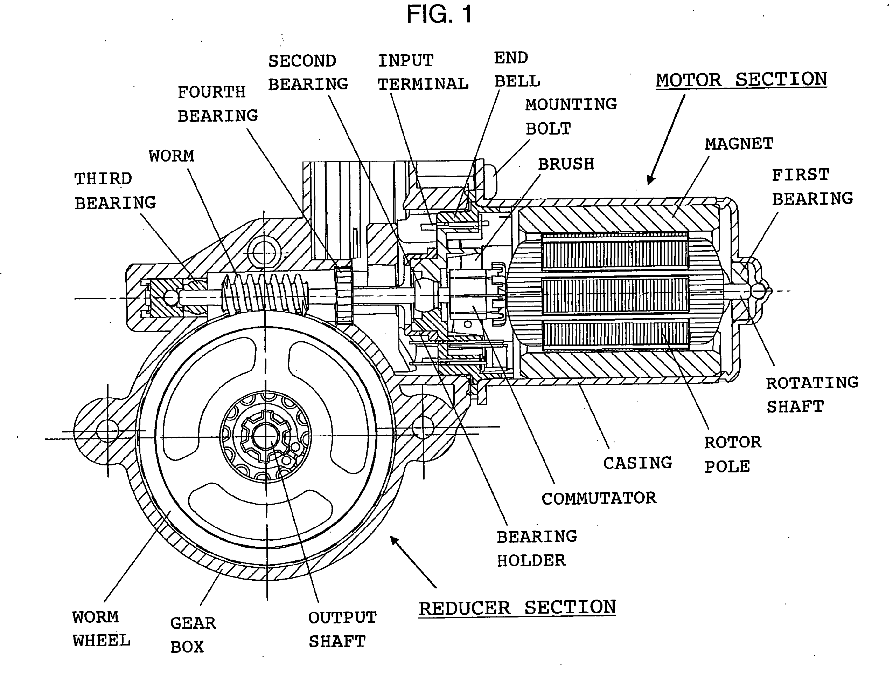

The present invention will next be described by way of examples. FIG. 1 is a vertical sectional view of a motor equipped with a reducer configured on the basis of the present invention. The motor equipped with a reducer is an assembly of a motor section and a reducer section. The motor section is configured such that a magnet is attached to the inner circumferential surface of a casing, which is formed of a metal material and assumes the form of a closed-bottomed tube. An end bell made of resin is fitted to an opening portion of the casing, thereby closing the opening portion. A commutator, and rotor poles composed of a laminated core and windings wound around the laminated core are mounted on a rotating shaft, thereby forming a motor rotor. A pair of input terminals are connected to a pair of brushes in contact with the commutator and project outward through the end bell from the motor section for electrical connection. One end of the rotating shaft is supported by a first bearing provided at the center of a bottom portion of the closed-bottomed tubular casing. An intermediate portion of the rotating shaft is supported by a second bearing housed in a central region of the end bell. The rotating shaft extends further outward from the motor section into the reducer section.

The reducer section is attached to the motor section by means of mounting bolts. The reducer section is configured such that a gear box made of resin houses a worm fixed on the rotating shaft, a worm wheel meshed with the worm, and other components. A distal end of the rotating shaft is supported by a third bearing housed in the gear box. When the motor of the motor section is driven, the rotating shaft rotates so as to rotate the worm wheel via the worm at a reduced speed. The rotation of the worm wheel rotates an output shaft via a buffer member and the like. The rotation of the output shaft can, for example, open and close window glass of an automobile via an unillustrated drive means. The above-mentioned configuration of the motor section and the reducer section can be the same as a conventional configuration.

The illustrated motor equipped with a reducer further includes a fourth bearing for supporting the rotating shaft. The present invention is characterized by the fourth bearing and a bearing holder for fixedly holding the fourth bearing. Thus, the rotating shaft is rotatably supported by two bearings provided in the motor section, and two bearings provided in the reducer section such that the worm press-fitted onto the rotating shaft is located between the two bearings. In other words, the rotating shaft is rotatably supported by a total of four bearings. Preferably, in order to absorb misalignment among the axial centers of the four bearings, at least one of the four bearings is a self-aligning bearing having a spherical outer shape.

### (First embodiment)

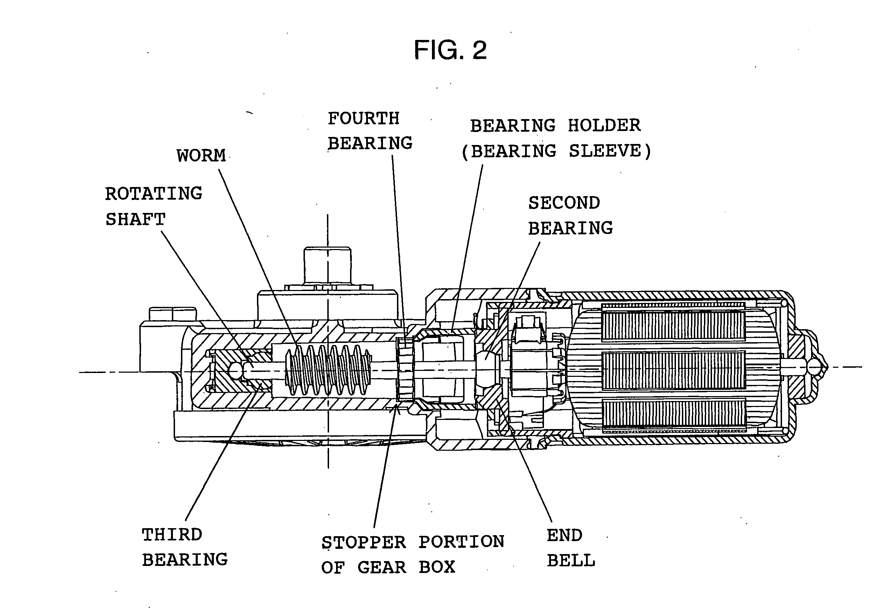

FIG. 2 is a sectional view as viewed from above in FIG. 1 and shows the fourth bearing, which is a feature of the present invention, and its peripheral configuration. As illustrated, the fourth bearing for supporting the rotating shaft is provided within the gear box between the worm and the second bearing, which is housed in a central portion of the end bell.

The first embodiment uses a bearing sleeve as the bearing holder, for fixing the fourth bearing. After being fitted onto the rotating shaft, the fourth bearing is fixedly held between the bearing sleeve and a stopper portion of the gear box. The stopper portion of the gear box can be a step or a projection formed integrally with the gear box made of resin.

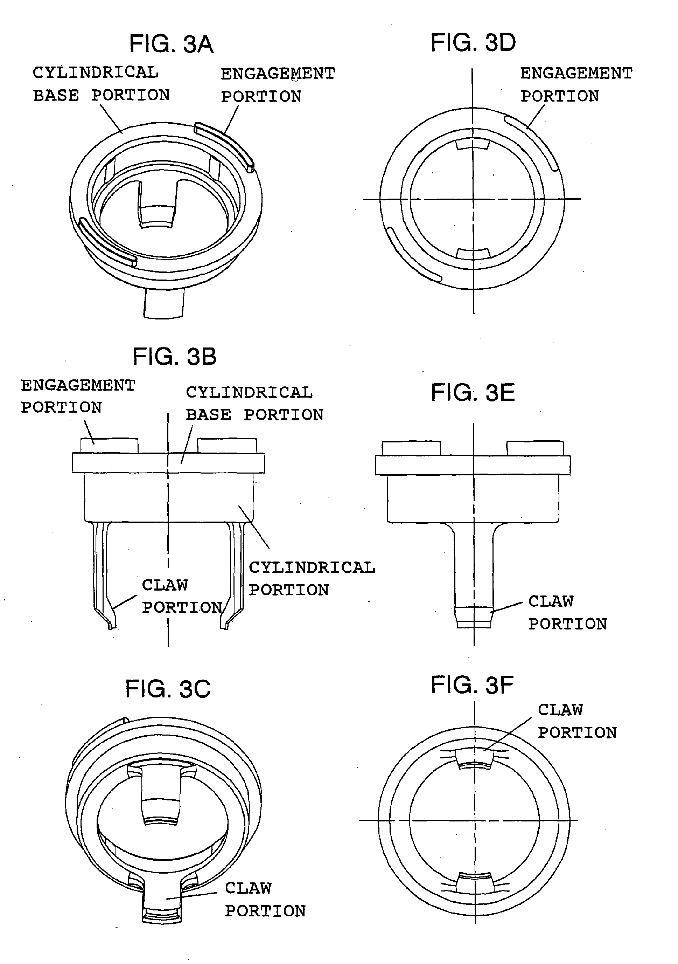

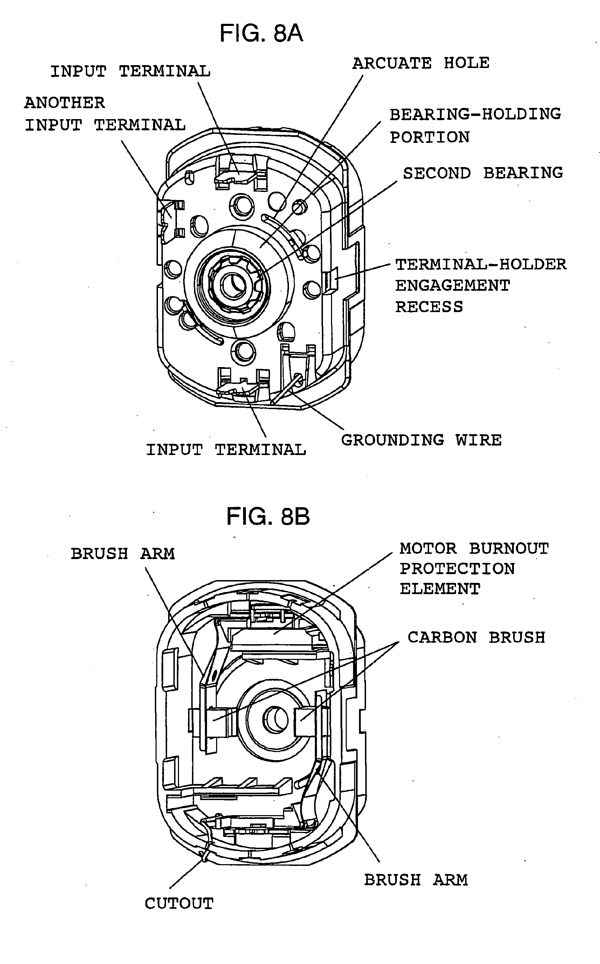

FIG. 3 is a series of views showing the bearing sleeve adapted to support the fourth bearing, wherein (A) to (F) are views of the bearing sleeve as viewed from different directions. As illustrated, the bearing sleeve is formed of resin and has the following integrally formed portions: a cylindrical portion to be fitted to a bearing-holding portion of the end bell (see FIG. 8); a pair of engagement portions provided at a cylindrical base portion of the cylindrical portion; and a pair of claw portions provided at the cylindrical portion on a side opposite the cylindrical base portion. The engagement portions are inserted into a pair of corresponding arcuate holes (see FIG. 8(A)) formed in the end bell of the motor section, thereby circumferentially positioning the bearing sleeve and joining the bearing sleeve to the motor section. The claw portions are adapted to support the fourth bearing.

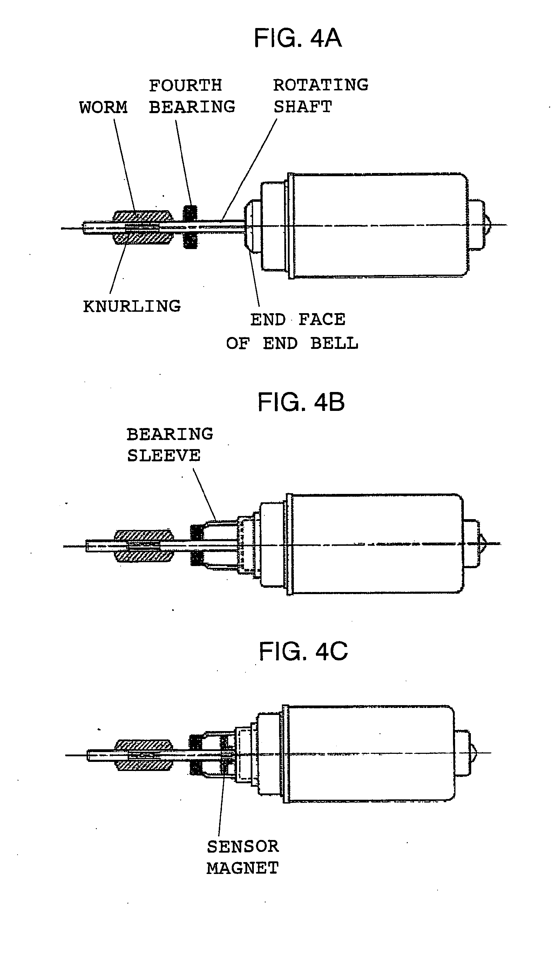

FIG. 4 is a series of views for explaining how to fix the fourth bearing and the worm on a rotating shaft. As shown in FIG. 4(A), after the fourth bearing is assembled onto the rotating shaft, a portion of the rotating shaft is knurled. Then, the worm is press-fitted onto the knurled portion of the rotating shaft. In this condition, the fourth bearing can rotate around the rotating shaft and can move leftward and rightward. Alternatively, after the fourth bearing and the worm are fitted onto the rotating shaft, a portion of the rotating shaft located toward a distal end of the rotation shaft can be knurled, and the worm can be drawn toward the distal end of the rotating shaft so as to be press-fitted onto the knurled portion. This procedure provides an advantage in that, even when a large press-fitting force is applied for strong fixation, the rotating shaft is not bent.

Next, as shown in FIG. 4(B), the bearing sleeve is fixedly assembled to the end face of the end bell. The inner span between the claw portions of the bearing sleeve (see FIG. 3) is smaller than the outside diameter of the fourth bearing. However, the claw portions deflect radially outward to thereby pass over the outer circumference of the fourth bearing, so that the bearing sleeve can be positioned between the fourth bearing and the end bell. As mentioned above, the bearing sleeve is fixed in place by means of inserting the engagement portions of the bearing sleeve into the corresponding arcuate holes formed in the end face of the end bell. By virtue of the procedure of press-fitting the,worm before positioning of the bearing sleeve, a space for receiving the worm before the knurling process can be secured on the rotating shaft. Thus, as mentioned above, the worm can be drawn toward the distal end of the rotating shaft for press fit.

FIG. 4(C) is a view illustrating how a sensor magnet is mounted. Usually, the rotation of a motor is measured by the following method: the magnetic flux of a sensor magnet fixed on a rotating shaft is detected by a Hall IC disposed on a stationary member of the motor. According to the illustrated configuration, in the case where the rotation of the motor is to be measured, the sensor magnet is assembled onto the rotating shaft before the fourth bearing is assembled onto the rotating shaft, whereby the sensor magnet can be disposed in an open space located between the end bell and the claw portions of the bearing sleeve.

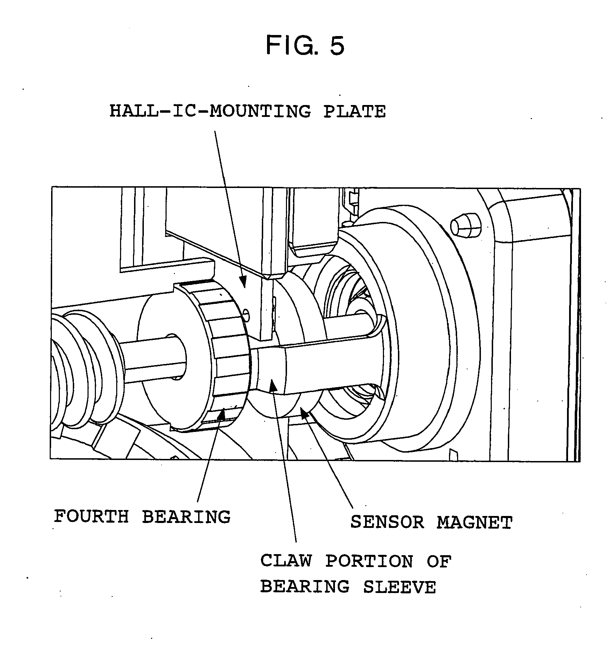

FIG. 5 is a view for explaining how the sensor magnet and the Hall IC are mounted. The sensor magnet is disposed internally of the paired claw portions of the bearing sleeve. A mounting plate on which the Hall IC is mounted is fixed between the fourth bearing and the sensor magnet such that the Hall IC faces the sensor magnet. By virtue of the use of the bearing sleeve having the paired claw portions, the Hall IC for detecting the magnetic flux of the sensor magnet can be readily disposed.

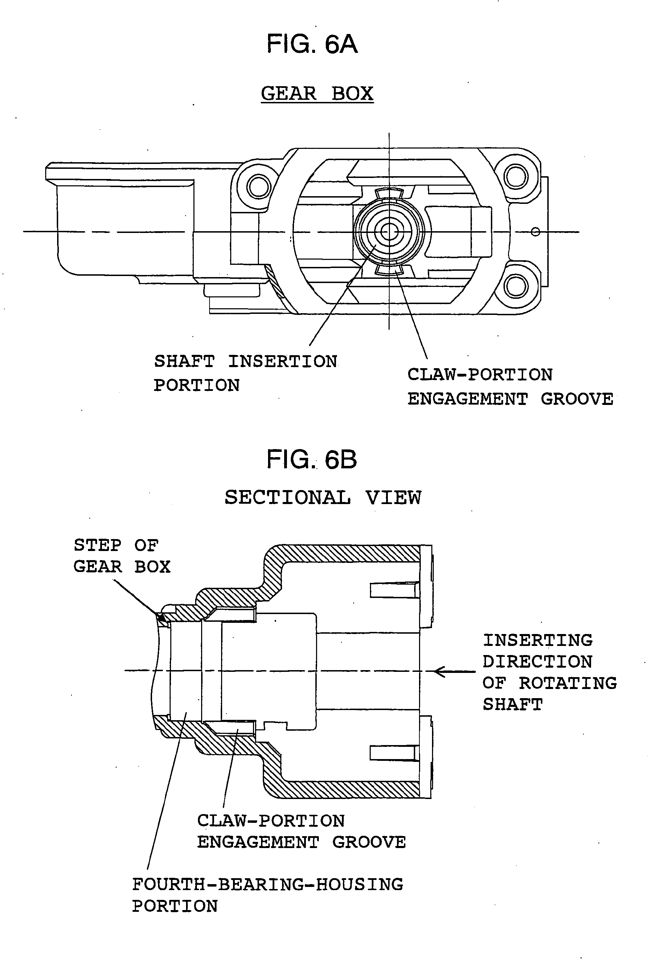

As described previously with reference to FIG. 4, the motor section having the rotating shaft on which the worm, the fourth bearing, the bearing sleeve, etc. are fixed is fixedly joined to the reducer section. FIG. 6 is a view showing the gear box to be fixedly joined to the motor section. FIG. 6(A) is a view of the gear box as viewed from the side toward the motor section. FIG. 6(B) is a sectional view showing a fourth-bearing-housing portion and its periphery of the gear box.

The rotating shaft on which the worm, the fourth bearing, etc. are fixed is inserted into a shaft insertion portion of the gear box. Since the third bearing is fixed beforehand in the gear box, when the rotating shaft is inserted in such a manner that a distal end of the rotating shaft is pressed into the third bearing, the fourth bearing comes into contact with the step (stopper portion) of the gear box and thus is prevented from proceeding further. At this time, the paired claw portions of the bearing sleeve are fitted into a pair of corresponding engagement grooves formed in the gear box. This circumferentially positions the motor section and the reducer section and prevents radially outward movement of the claw portions, thereby reliably supporting the fourth bearing in the axial direction of the rotating shaft by means of distal ends of the claw portions.

### (Second embodiment)

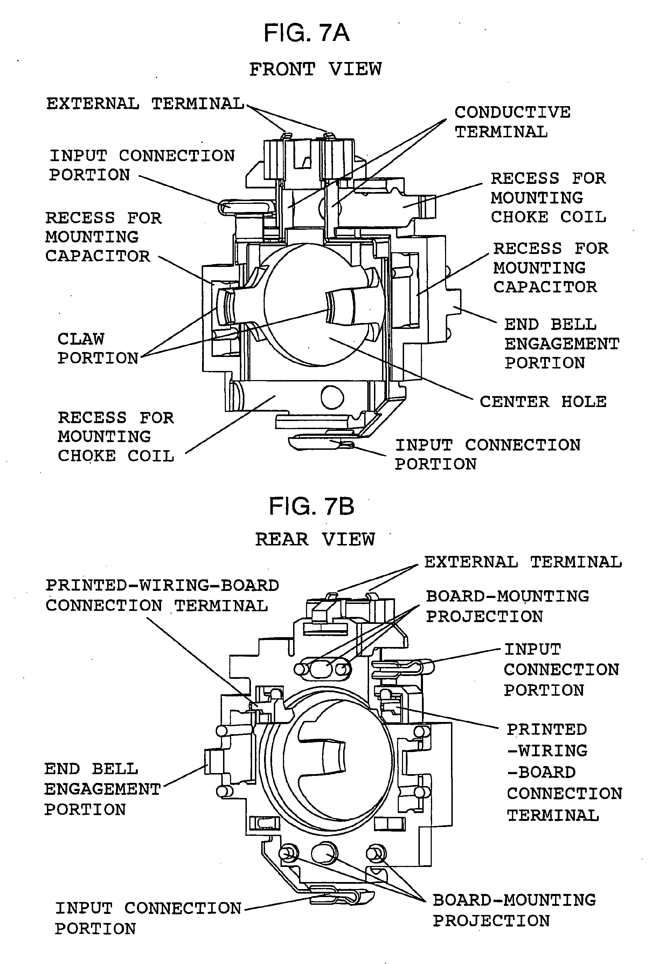

The second embodiment uses a terminal holder as the bearing holder, for fixing the fourth bearing. FIG. 7 is a pair of views for explaining the terminal holder, wherein (A) is a view from the exterior of the motor section (front view), and (B) is a view from the interior of the motor section (rear view). The terminal holder not only has a function of supporting the fourth bearing as in the case of the bearing sleeve of the first embodiment but also has conductive materials disposed at positions suited for connecting the motor input terminals to external lead wires and further enables mounting of electric elements. Electric elements, such as choke coils, capacitors, etc., for killing noise can be mounted on the terminal holder.

The terminal holder is formed of resin and has, on its front side, two integrally formed claw portions, which are located on the left and right sides of a center hole into which a bearing-holding portion of the end bell is fitted. The claw portions are adapted to support the fourth bearing by means of their distal ends (see FIG. 1). The terminal holder also has a pair of conductive terminals incorporated therein. The pair of conductive terminals include a pair of input connection portions which come into contact with a pair of the input terminals projecting from the end bell for connection with the paired input terminals, a pair of external terminals which are electrically connected to a circuit externally of the motor, and the conductive materials for establishing electric wiring between the input connection portions and the external terminals. By means of the conductive materials, the input connection portions, and the external terminals corresponding to the input connection portions can be directly connected to each other. Alternatively, in the case where choke coils and capacitors are mounted on the terminal holder, each of the choke coils can be placed in series between and connected to the corresponding input connection portion and the corresponding external terminal, and the capacitors can be connected to the paired corresponding conductive materials such that opposite terminals of each capacitor are connected to the paired conductive materials. Each of the external terminals of the conductive terminals can assume the form of a receptacle terminal, or a constricted form for allowing a lead wire to be soldered thereto. When the terminal holder is assembled to the end bell, the paired input connection portions are brought into contact with the corresponding input terminals projecting from the end bell, followed by soldering for electrical connection.

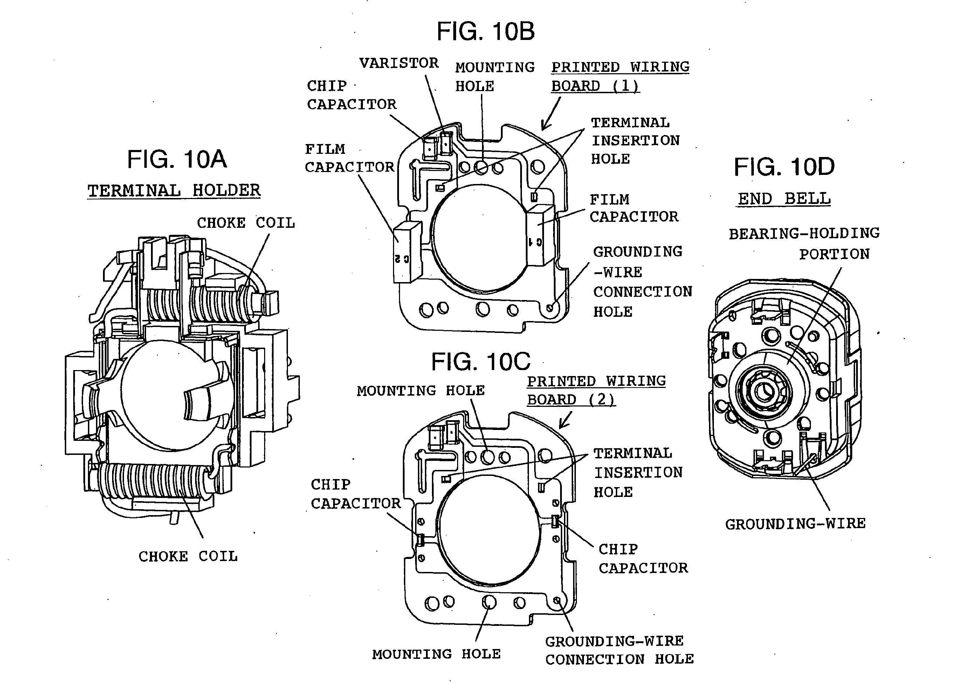

FIG. 8 shows the end bell, wherein (A) is a view from the exterior of the motor section, and (B) is a view from the interior of the motor section. The end bell made of resin is fitted into an opening portion of the casing of the motor section. The bearing-holding portion formed integrally at a central portion of the end bell of resin houses the second bearing adapted to support the rotating shaft. A grounding wire which extends through the end bell is used to ground capacitors mounted on a printed wiring board (see FIG. 10) to the casing of the motor section in the case where such capacitors are used. A pair of carbon brushes in contact with the commutator are connected to corresponding brush arms. The brush arms are conductive metal plates; hold the corresponding carbon brushes; and are supported by the end bell. The spring nature of the metal plates causes the carbon brushes to be pressed against the commutator, thereby establishing sliding contact therebetween. The paired input terminals connected to the brush arms extend through and project outward from the end bell for electrical connection. A motor burnout protection element, such as a circuit breaker or a PTC, can be assembled to the interior of the end bell. When the motor burnout protection element is assembled into the end bell, another input terminal is used in place of one of the paired input terminals so as to insert the motor burnout protection element in series into a circuit of power supply to the brushes.

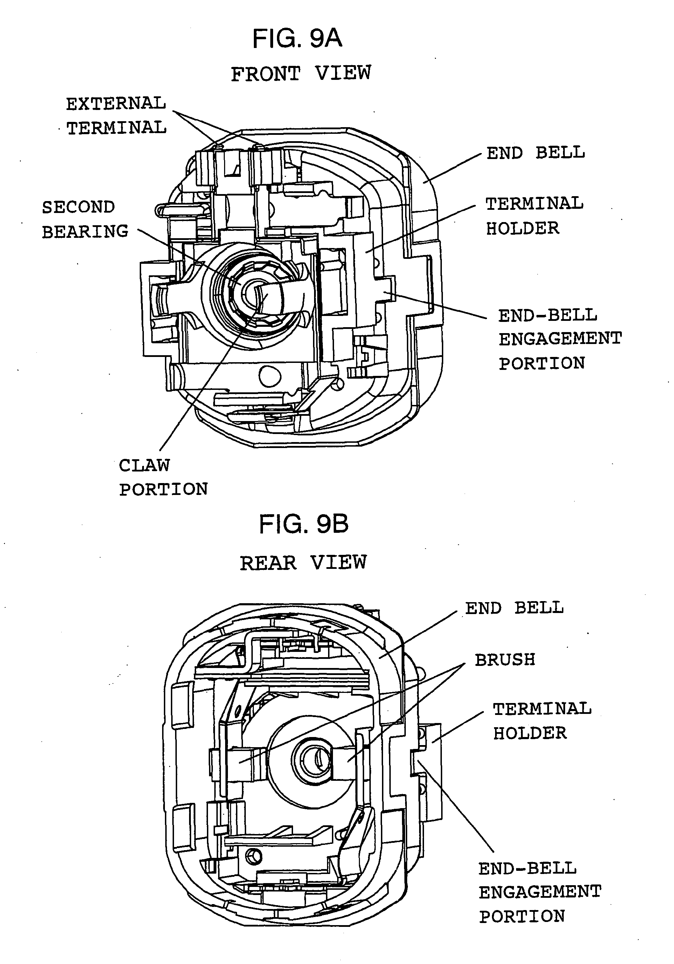

FIG. 9 is a pair of views showing a state in which the terminal holder is assembled to the end bell, wherein (A) is a view from the exterior of the motor section (front view), and (B) is a view from the interior of the motor section (rear view). The terminal holder made of resin has a pair of end-bell engagement portions formed integrally at laterally opposite sides of the terminal holder. The paired end-bell engagement portions have respective claws. By virtue of the elastic force of the end-bell engagement portions, the claws of the end-bell engagement portions are latched in corresponding terminal-holder engagement recesses (see FIG. 8(A)) formed in the end bell. Thus, the terminal holder and the end bell can be assembled together through one-touch operation.

The motor is assembled in the following manner. First, the end bell shown in FIG. 8 is fitted into the opening portion of the casing of the motor section. At this time, the rotating shaft of the motor section projects outward from the motor section through the second bearing housed in the bearing-holding portion of the end bell.

Next, the fourth bearing and then the worm are fitted onto the rotating shaft until the fourth bearing almost hits against the bearing-holding portion of the end bell. Subsequently, a portion of the rotating shaft is knurled. The worm is drawn in a direction of being drawn out from the shaft so as to be press-fitted onto the knurled portion of the rotating shaft. A motor assembly thus is formed. In this condition, the fourth bearing can rotate around the rotating shaft and can move leftward and rightward. Next, the terminal holder is attached to the end bell of the motor assembly.

Next, the motor assembly having the terminal holder attached thereto is assembled with the gear box, which is described above with reference to FIG. 6. The fourth bearing is biased toward the distal end of the rotating shaft from the ends of the integrally formed, paired claw portions of the terminal holder. In this condition, the rotating shaft on which the worm, the fourth bearing, etc. are fixed is inserted into the shaft insertion portion of the gear box. Since the third bearing is fixed beforehand in a third-bearing-housing portion of the gear box, when the rotating shaft is inserted in such a manner that the distal end of the rotating shaft is pressed into the third bearing, the fourth bearing comes into contact with the step of the gear box and thus is prevented from proceeding further, thereby being positioned in the fourth-bearing-housing portion of the gear box. At this time, the integrally formed, paired claw portions of the terminal box support the fourth bearing in the axial direction of the rotating shaft by means of the distal ends of the claw portions. The assembly of the motor thus is completed.

FIG. 10 is a series of views for explaining another example assembly of the terminal holder to the end bell. As mentioned above, electric circuit elements, such as choke coils and capacitors, can be mounted on the terminal holder. In the case where far more elements need to be mounted, a printed wiring board on which these elements are mounted can be used in such a manner as to be fixedly held between the end bell and the terminal holder. FIG. 10(A) is a view of the terminal holder on which choke coils are mounted, as viewed from the exterior of the motor section; FIGS. 10(B)and 10(C) show two printed wiring boards of different types; and FIG. 10(D) is a view of the above-mentioned end bell as viewed from the exterior of the motor section. As illustrated, the end bell has a cylindrical bearing-holding portion, whereas the terminal holder and the printed wiring board have respective circular center holes, into which the cylindrical bearing-holding portion is fitted. In a motor equipped with a reducer, a dead space is present outside an end bell. The terminal holder effectively utilizes the dead space, whereby the size of the motor can be reduced. Since the terminal holder is assembled to the exterior of the end bell, the motor section itself can be used in common with other applications without need to change design.

In the case of use of the printed wiring board, assembly is carried out as follows. First, the terminal holder shown in FIG. 10(A) and the printed wiring board shown in FIG. 10(B) or 10(C) are assembled together. Subsequently, the resultant terminal holder is assembled to the end bell. FIG. 10(B) shows a printed wiring board (1) on which a noise-killing circuit is formed by use of a chip capacitor and a varistor and two additional film capacitors. FIG. 10(C) shows a printed wiring board (2) on which a noise-killing circuit (2) is formed by use of a chip capacitor, a varistor, and two additional chip capacitors. In response to various requirements associated with applications, only the printed wiring board may be changed, while the end bell, the terminal holder, etc. can be used in common.

The terminal holder has a plurality of board-mounting projections (see FIG. 7(B)) on its rear side. The board-mounting projections are inserted into corresponding mounting holes of the printed wiring board (see FIGS. 10(B) and 10(C)). Then, the ends of the board-mounting projections are crushed, thereby fixedly uniting the terminal holder and the printed wiring board together. At this time, a pair of printed-wiring-board connection terminals connected electrically to a pair of the respective conductive terminals (see FIG. 7(B)) are inserted through corresponding terminal insertion holes (see FIGS. 10(B) and 10(C)) formed in the printed wiring board. Then, the printed-wiring-board connection terminals are soldered on the rear surface of the printed wiring board. As a result, in an assembly of the terminal holder and the printed wiring board on which various electric-noise-killing elements are mounted, the conductive terminals and the printed wiring board are electrically connected.

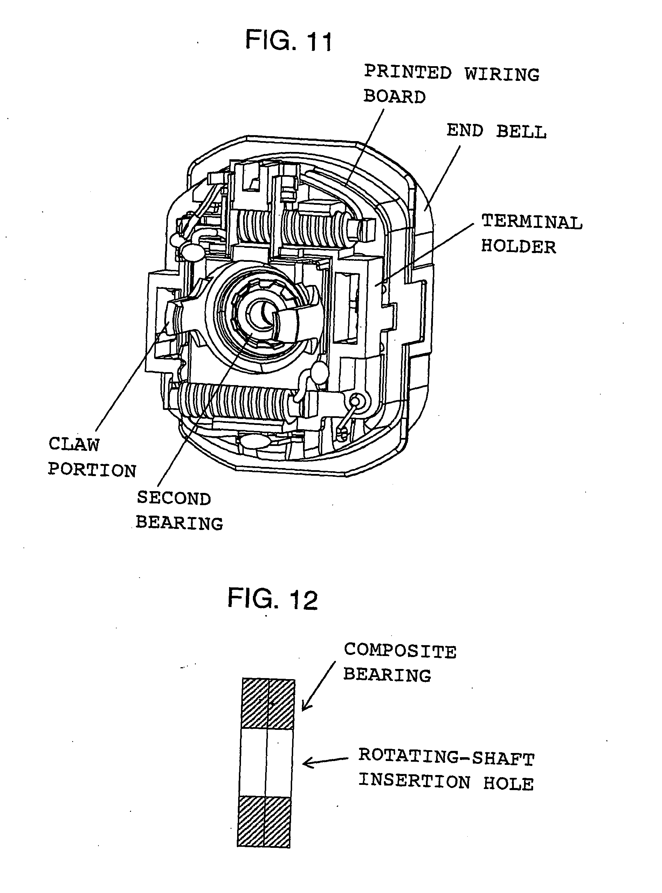

FIG. 11 is a view showing the terminal holder to which the printed wiring board is assembled. The printed wiring board is fixedly held between the end bell and the terminal holder or is fixedly held by the terminal holder. The terminal holder and the end bell are assembled together with a clearance of about 1 mm to 2 mm therebetween. The printed wiring board is held in the clearance as needed.

FIG. 12 shows a composite bearing which is used as the fourth bearing. The composite bearing is a composite of two cylindrical bearings each having a central rotating-shaft insertion hole through which the rotating shaft extends. Use of such a composite bearing exhibits improved lubrication, since lubricant is held in a space defined by chamfered portions of the two bearings.

The above embodiments are described while mentioning a structure in which the end bell is disposed on a side toward the reducer section. However, a bottom portion of the closed-bottomed tubular casing of the motor section may be disposed on the side toward the reducer section. Even in this case, through employment of four bearings as described above, the deflection of the rotating shaft can be prevented. The above embodiments are also described while mentioning, as the bearing holder, an independent component; specifically, the bearing sleeve in the first embodiment and the terminal holder in the second embodiment. However, the bearing holder may be formed integrally with another component; for example, the end bell.

## Claims

1. A motor equipped with a reducer comprising a motor section, and a reducer section assembled to the motor section,
the motor section having a first bearing provided at the center of a bottom portion of a closed-bottomed tubular casing, a second bearing provided at the center of an end bell fitted to an opening portion of the casing, and a rotating shaft which is supported by the first bearing and the second bearing and extends outward from the motor section in such a manner that a distal end of an outward extending portion of the rotating shaft is rotatably supported by a third bearing provided within the reducer section,
the reducer section having a gear box, a worm mounted on the outward extending portion of the rotating shaft which is housed in the gear box, a worm wheel meshed with the worm, and an output shaft positioned at the center of the worm wheel and rotatable with the worm wheel,
the motor further comprising:
a fourth bearing adapted to support the rotating shaft and provided within the reducer section, and
a bearing holder for fixedly holding the fourth bearing between the bearing holder and a stopper portion provided on the gear box.

2. A motor equipped with a reducer according to claim 1, wherein the fourth bearing is provided between the worm and the second bearing provided at the center of the end bell, and the bearing holder is fixed to an end face of the end bell.

3. A motor equipped with a reducer according to claim 1, wherein the stopper portion provided on the gear box is a step or a projection formed integrally with the gear box made of resin.

4. A motor equipped with a reducer according to claim 1, wherein the bearing holder is formed of resin and has an integrally formed claw portion for supporting the fourth bearing by means of a distal end of the claw portion, and an integrally formed engagement portion to be inserted into a corresponding hole formed in the end bell for engagement with the end bell.

5. A motor equipped with a reducer according to claim 4, wherein an engagement groove is formed in the gear box for allowing the claw portion of the bearing holder to be fitted into the engagement groove so as to prevent radially outward movement of the claw portion, thereby supporting the fourth bearing in an axial direction of the rotating shaft by means of a distal end of the claw portion.

6. A motor equipped with a reducer according to claim 1, wherein, in an open space located between the end bell and a claw portion of the bearing holder, a sensor magnet for measuring rotation of the motor is fixed on the rotating shaft, and a mounting plate on which a Hall IC is mounted is fixed between the fourth bearing and the sensor magnet such that the Hall IC faces the sensor magnet.

7. A motor equipped with a reducer according to claim 1, wherein the fourth bearing is a composite of two cylindrical bearings.

8. A motor equipped with a reducer according to claim 1, wherein the bearing holder is formed of resin and has an integrally formed claw portion for supporting the fourth bearing by means of a distal end of the claw portion, and an integrally formed engagement portion to be fitted into a corresponding recess formed in the end bell for engagement with the end bell; a pair of conductive terminals are assembled into the bearing holder; and the pair of conductive terminals include a pair of input connection portions which come into contact with a pair of input terminals projecting from the end bell for connection with the pair of input terminals, a pair of external terminals which are electrically connected to a circuit externally of the motor, and a conductive material for establishing electric wiring between the input connection portions and the external terminals.

9. A method of manufacturing a motor equipped with a reducer comprising a motor section, and a reducer section assembled to the motor section,
the motor section having a first bearing provided at the center of a bottom portion of a closed-bottomed tubular casing, a second bearing provided at the center of an end bell fitted to an opening portion of the casing, and a rotating shaft which is supported by the first bearing and the second bearing and extends outward from the motor section in such a manner that a distal end of an outward extending portion of the rotating shaft is rotatably supported by a third bearing provided within the reducer section,
the reducer section having a gear box, a worm mounted on the outward extending portion of the rotating shaft which is housed in the gear box, a worm wheel meshed with the worm, and an output shaft positioned at the center of the worm wheel and rotatable with the worm wheel,
the method comprising:
after assembling a fourth bearing onto the outward extending portion of the rotating shaft extending from the assembled motor section, knurling a portion of the rotating shaft and press-fitting the worm onto the knurled portion;
fixedly assembling a bearing holder to an end face of the end bell; and
inserting the outward extending portion of the rotating shaft into an insertion portion of the gear box until the fourth bearing comes into contact with a stopper portion provided on the gear box, so as to fixedly hold the fourth bearing between the bearing holder and the stopper portion provided on the gear box.

10. A method of manufacturing a motor equipped with a reducer according to claim 9, wherein, after the fourth bearing and the worm are fitted onto the rotating shaft, a portion of the rotating shaft located toward the distal end of the rotation shaft is knurled, and the worm is drawn toward the distal end of the rotating shaft so as to be press-fitted onto the knurled portion.
